# EUROPEAN PATENT APPLICATION

(11) **EP 1 203 621 A1**
(43) Date of publication of application: **08.05.2002**
(21) Application number: 01906157.1
(22) Date of filing: 21.02.2001
(51) Int. Cl.: B09B 3/00, C05F 9/02

(54) **GREEN GARBAGE TREATMENT APPARATUS**

(30) Priority: 22.02.2000 JP 2000043771
(71) Applicant: Sanyo Electric Co., Ltd., Moriguchi City, Osaka 570-8677 (JP)
(72) Inventor: YAMADA, Atsushi, c/o Sanyo Electric Co., LTD., Moriguchi City, Osaka 570-8677 (JP); IKEMATSU, Mineo, c/o Sanyo Electric Co., LTD., Moriguchi City, Osaka 570-8677 (JP); SUZUKI, Haruhiko, c/o Sanyo Electric Co., LTD., Moriguchi City, Osaka 570-8677 (JP); SEKIGUCHI, Tatsuhiko, c/o Sanyo Electric Co., LTD., Moriguchi City, Osaka 570-8677 (JP)
(74) Representative: Cross, Rupert Edward Blount
(86) International application number: JP0101240
(87) International publication number: WO0162404

(57) **Abstract**

A green garbage treatment apparatus which comprises a disposer, a flow rate adjustment tank for temporarily storing a mixture of a green kitchen garbage ground by the disposer and a kitchen waste water, a solid-liquid separation device for separating the mixture into a solid component and a liquid component, a composting device for composting the solid component, a precipitation-separation device for allowing fine particles in the liquid component to precipitate, a waste water treatment device for subjecting the liquid component fed from the precipitation-separation device via a dividing device to a biological treatment to thereby obtain a treated water, and an insect removal device for removing deleterious insects such as a fly which are generated, for example, in the waste water treatment device. The apparatus is advantageous, in particular, in that it can remove insects such as a fly which are generated in the waste water treatment device.

## Description

### BACKGROUND OF THE INVENTION

### Field of the Invention

The present invention relates to a waste treatment apparatus comprising a solid-liquid separating device for separating a mixture composed of a solid substance and a liquid substance, the solid-liquid separating device subjecting the mixture to filtering to discharge organic waste water while decomposing organic solid substances by the action of microorganisms existing in the organic solid substance.

### Description of Related Art

Methods of treating organic waste water using aerobic microorganisms have been actively studied and developed. For example, an activated sludge method is usually used in sewage treatment plants, and a submerged infiltration bed is used along with the activated sludge method in combined waste water purifying tanks.

In addition, methods in which domestic kitchen garbage or the like is fragmented or liquefied by a disposal unit so that it can be treated as waste water containing garbage have been also developed.

For example, Japanese Patent Laid-Open Publication No. Hei 9-1117 discloses an apparatus in which waste water containing garbage is introduced into a solid substance treating section which decomposes a solid substance by means of microorganisms and discharges primary treated water, which is then introduced into a waste water treating tank for aeration. In this manner, solid substances are decomposed and removed from the waste water containing garbage from the garbage disposal, and the waste water is purified.

In the apparatus disclosed in the above publication, waste water is subjected to aeration by an air diffuser in the waste water treating tank, which is a treatment basically similar to the activated sludge method.

The present inventors, on the other hand, found that more effective purification of waste water can be performed when a waste water treating device (a secondary treating device) comprising a packed layer which is packed with microorganism carriers is provided downstream of the solid substance treating device (a primary treating device). (See Japanese Patent Laid-Open Publication No. Hei 11-19674). The inventors of the present application further produced a waste treatment apparatus capable of effectively treating organic waste such as liquid output from a disposal or kitchen waste water using a preferable aerobic treatment by means of natural diffusion of oxygen and without forced circulation of air using an air pump (Japanese Paten Application No. Hei 11-184137).

With regard to the apparatuses disclosed in the above-mentioned publications, while a waste water treating device comprising a packed layer which contains microorganism carriers has an advantage that an excellent waste water purifying ability can be provided with a simple structure and at a low cost, because waste water typically contains significant amounts of nutrients and oxygen, such waste water provides an environment in which flies and similar vermin can thrive. Therefore, employment of such technology can create a breeding ground for harmful insects. Such an environment is obviously unhygienic and undesirable.

One method employed to prevent the breeding of insects is to tightly seal the waste water treating device so as to prevent insects from entering. However, the introduction of larvae or eggs in garbage entering the device cannot be prevented by this method. Furthermore, while methods of killing insects by high temperature steam or the like have also been proposed, such methods create a problem that high temperatures can also kill the microorganisms purifying the waste water and would therefore render purification inoperative.

### SUMMARY OF THE INVENTION

The present invention was conceived in view of the aforementioned problems of the related art and aims to provide an apparatus for treating garbage, or a waste treatment apparatus, capable of removing insects or the like from the waste water to be treated.

In accordance with one aspect of the present invention, a waste treatment apparatus comprises a disposal for mechanically reducing waste discharged from a kitchen; a flow rate controlling tank for temporarily storing a mixture of the waste reduced by said disposal and kitchen waste water; a solid-liquid separating device for separating the mixture supplied from the flow rate controlling tank into a solid component and a liquid component; a composting device for converting the solid component separated by the solid-liquid separating device into a compost; a precipitation-separation tank for precipitating fine particles in the liquid component supplied from the solid-liquid separating device; a split-flow device for distributing the liquid component supplied from the precipitation-separation tank; a waste water treating device for biologically treating the liquid part supplied from the split-flow device to thereby produce treated water; and an insect removal device for ridding said waste water treating device of insect manifestation.

Said insect removal device may introduce into said sealed waste water treating device air or steam or the like at a temperature at which the insects are killed or the activation level of the insects is decreased, but at which the microorganisms required for biological treatment of waste water will not be adversely affected.

Said temperature may be between 40°C and 60°C, preferably between 40°C and 50°C, and more preferably between 45°C and 50°C. These temperature ranges are preferable because most targeted insects will not hatch after they have been exposed to an environmental temperature of 40°C for a certain period (see Japanese Patent Application No. Hei 11-270758), and because the level of activation for the microorganisms required for biological treatment decreases at 60°C.

Said insect removal device may temporarily cause said sealed waste water treating device to be temporarily filled with liquid so as to suffocate or otherwise exterminate manifesting insects.

Said insect removal device may include a sprinkler located within said sealed waste water treating device for washing the inner wall of the waste water treating device, so as to wash away insects present on the inner wall off.

### BRIEF DESCRIPTION OF THE DRAWINGS

These and other objects of the invention will be explained in the description below, in connection with the accompanying drawings, in which:
FIG. 1 is a front perspective view showing the structure of an apparatus comprising an organic waste water treatment device in accordance with one embodiment of the present invention;
FIG. 2 is a partial perspective view of a solid-liquid separating device 400; and
FIGs. 3(a), 3(b) and 3(c) are schematic views of three embodiments of an insect removal device 900, Fig. 3(a) being a heater type device, Fig. 3(b) being a suffocation type device, and Fig. 3(c) being a washing type.

### DETAILED DESCRIPTION OF THE PREFERRED EMBODIMENT

A first embodiment of the present invention will be described with reference to the accompanying drawings.

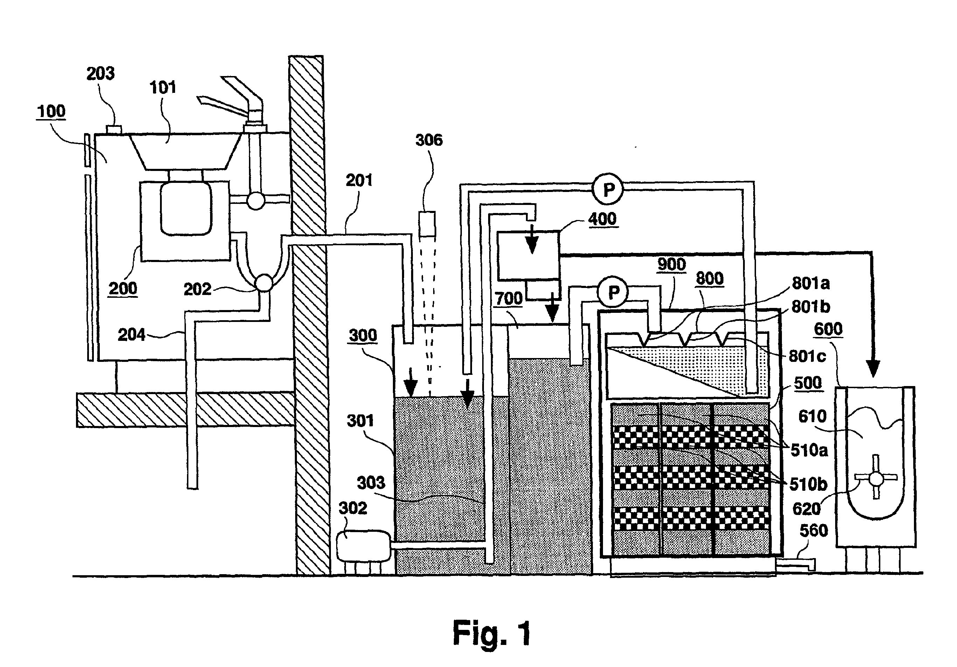

Fig. 1 shows the structure of a waste treatment system according to the present embodiment, the system being connected to a kitchen counter.

Referring to Fig. 1, the waste treatment system comprises a disposal 200 for finely grinding, mulching, or similarly reducing into a fine composition waste discharged from a sink 101 of the kitchen counter 100; a flow rate controlling tank 300 into which flows a mixture from the disposal of a solid substance such as ground garbage or the like and a liquid substance such as kitchen waste water or the like; a solid-liquid separating device 400 for separating the mixture into a solid substance and a liquid substance; a precipitation-separation tank 700 for precipitating fine particles in the liquid component; a split-flow device 800 for distributing a supernatant pumped from the precipitation-separation tank 700; a waste water treating device 500 for performing a purification treatment of the liquid substance; an insect removal device 900 surrounding said waste water treating device 500 for removing insects such as flies; and a solid substance treating device (composting device) 600 for composting the solid substance.

The disposal 200, which includes an electromagnetic valve 202 and a start switch 203, is disposed under the sink 101 while the solid-liquid separating device 400, the precipitation tank 700, the split-flow device 800, the secondary treating device 500, the insect removal device 900, and the solid substance treating device 600 are housed in a body case (not shown) and is located outside the house. The mixture discharged from the disposal 200 is temporarily introduced into the flow rate controlling tank 300 through an introduction pipe 201.

When only water, which is harmless to the environment when discharged into sewerage, is to be directly discharged through the discharge pipe 204, the start switch is turned OFF to inhibit start of the disposal 200. The electromagnetic valve 202 then causes the disposal 200 and the discharge pipe 204 to communicate each other, so that water from the sink 101 is discharged into sewerage.

On the other hand, when garbage or waste is to be discharged along with water from the sink 101, it is not desirable to discharge such water containing waste untreated, and therefore the start switch 203 is turned ON to start the disposal 200. The electromagnetic valve 202 then causes the disposal 200 and the introduction pipe 201 to communicate with each other, so that composting and purification, as will be described later, is performed.

The flow rate controlling tank 300 comprises a storage tank 301 for storing the mixture introduced through the introduction pipe 201, a solid substance transporting air lift pump 302 for transporting the mixture mainly composed of solid substances existing at the base portion of the storage tank 301 to the solid-liquid separating device 400 through the pipe 303, and a water level sensor 306 for detecting the water level of the mixture stored in the storage tank 301.

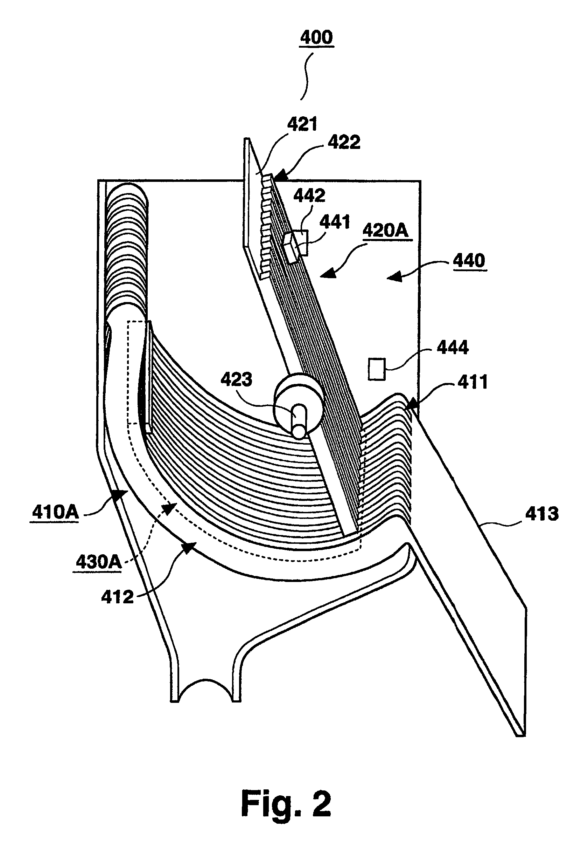

The solid-liquid separating device 400 has the structure disclosed in Japanese Patent Laid-Open Publication No. 2000-15010. More specifically, as shown in Fig. 2, the solid-liquid separating device 400 comprises a first slit portion 410A having a large number of drain slots 411 formed therein, a transport portion 420A which rotates for transporting the mixture having been subjected to solid-liquid separation, a second slit portion 430A which is inserted between drain slots 411 and swings between the drain slots for accelerating solid-liquid separation of the introduced mixture, and a position detection portion 440 for detecting the position of the transport portion 420A. The first slit portion 410A, the transport portion 420A, and the second slit portion 430A are integrally molded from resin, plastic, or the like.

The first slit portion 410A has semicircular drain teeth 412 for screening and draining the mixture introduced through the introduction pipe 201, and an introduction plate 413 for guiding the mixture having been subjected to draining (namely, solid substances in this case) to the solid substance treating device 600. Each of the drain slots 411 is formed between drain teeth 412.

The transport portion 420A is fixed to a rotation shaft 423 coupled to a motor (not shown), and is composed of a transport plate 421 for transporting solid substances and ribs 422 provided on the rear surface of the transport plate 421. The ribs 422 are provided so as to provide the transport plate 421, which is formed of a thin plastic material, with sufficient strength to resist deformation.

The introduced mixture is subjected to solid-liquid separation at the first slit portion 410A, such that the solid substances are separated from liquid and are accumulated on the first slit portion 410A. The second slit portion 430A connected to the lower end portion of the transport portion 420A is rotated back and forth a plurality of times, to thereby accelerate the solid-liquid separation by the first slit portion 410A. Then, with one clockwise rotation of the transport portion 420A, the solid substances are transported onto the transport plate 421 which then drops them onto the introduction plate 413.

Referring back to Fig. 1, numeral 700 denotes the precipitation-separation tank 700 which precipitates fine particulate from the liquid component supplied from the solid-liquid separating device 400, and numeral 500 denotes the secondary treating device functioning as an organic waste water treating device for treating organic waste water (primary treated water) which is discharged from the solid-liquid separating device 400. Further, numeral 800 denotes the split-flow device which distributes and introduces the supernatant supplied from the precipitation-separation tank 700 into the secondary treating device 500.

In this example, the split-flow device 800, in order to distribute the waste water into three portions of the waste water treating device 500, has three cutout portions (triangular weirs) 801c of the same height for evenly distributing the waste water into three flows. Sludge accumulated on the portion before these cutouts 801c are returned to the flow rate controlling device 300.

The waste water treating device 500 comprises two perforated cylindrical mesh basket containers 510a, 510b having a diameter of 15 cm and a total height of the containers 510a and 510b is 15 cm. These mesh basket containers are vertically arranged to be in contact with one another.

The purpose for vertically arranging the cylindrical mesh basket containers 510a, 510b in upper and lower levels in contact with each other is as follows. When the garbage treatment apparatus is used for an extensive time, the container 510a at the upper level will eventually become clogged with solid substances, thereby preventing water from flowing through the container. To deal with this problem, maintenance of the containers is necessary. In this maintenance, the container 510a at the upper level is replaced by the container 510b at the lower level, and a new microorganism carrier is supplied at the lower level. The vertical two-level arrangement according to the present embodiment facilitates such maintenance.

It should be noted that any number (2 or more) of levels of the cylindrical containers 510a, 510b may be provided for similarly achieving the effects of the present invention.

The ratio of the average grain size of the microorganism carriers within the cylindrical containers 510a and 510b is set to 1 : 1.5 ∼ 2.5, because when the ratio is greater than 1 : 1.5 ∼ 2.5 there is a possibility that a microorganisms carrier having a smaller average grain size would enter a microorganism carrier having a larger average grain size.

All the containers are packed with wood chips (microorganism carriers) composed of shavings of Japanese cedar, so that the waste water treating device 500 subjects organic components within the introduced organic waste water to an oxidation decomposing treatment by means of aerobic microorganisms living in the carriers.

In the example described, the mesh size (a gap) of the cylindrical mesh basket containers 510a, 510b is 3 ~ 7 mm, preferably 5 mm, and the size of wood chip is 2 ~ 10 mm.

In another configuration, in the cylindrical mesh basket containers 510a and 510b, the bottom 5 cm are packed with wood chips of 5 ∼ 10 mm size and next 10 cm are packed with 2 ~ 4 mm wood chips.

In still another configuration, central cylindrical areas (diameter: 5 cm) in the cylindrical mesh basket containers 510a and 510b are packed with wood chips of 2 ~ 4 mm size, and peripheral areas of the cylindrical mesh basket containers 510a and 510b are packed with 5 ∼ 10 mm wood chips.

Other types of containers other than mesh basket containers may be used as the cylindrical containers 510a, 510b, as long as they include holes through which air can pass. Unglazed containers may be used, for example.

Weirs (cutout portions) are formed in the split-flow device 800. The action of these weirs (cutout portions) allows the primary treated water to be evenly distributed into a plurality of waste water treating devices 500 located below.

The weir (a cutout portion) of the split-flow device 800 is formed by cutting out a triangular piece having each side of 5cm. It is preferable to appropriately vary the side length of the triangular piece in proportion to an amount of liquid to be supplied from the precipitation-separation tank 700. If the weirs are small even when a large amount of the liquid component is supplied, the liquid would overflow from the split-flow device 800 or the weirs would be clogged with fine particles contained in the liquid supplied from the precipitation-separation tank 700.

Further, the split-flow device 800 preferably has an inclined bottom so as to allow cleaning when sludge is accumulated thereon, and a pump is provided for pumping the accumulated sludge. The waste water after cleaning is returned back to the flow rate controlling tank 300 or the precipitation-separation tank 700.

A discharge pipe 560 is connected to the bottom of the containers 500 for discharging treated water.

In the waste water treating device 500 having the structure as described above, the primary treated water in the solid-liquid separation device 400 is diffused on the center part of the surface of the cylindrical mesh basket containers 510a, flows downward in contact with the microorganisms which decompose the organic components in the primary treated water, and is finally discharged through the discharge pipe 560 out of the garbage treating apparatus.

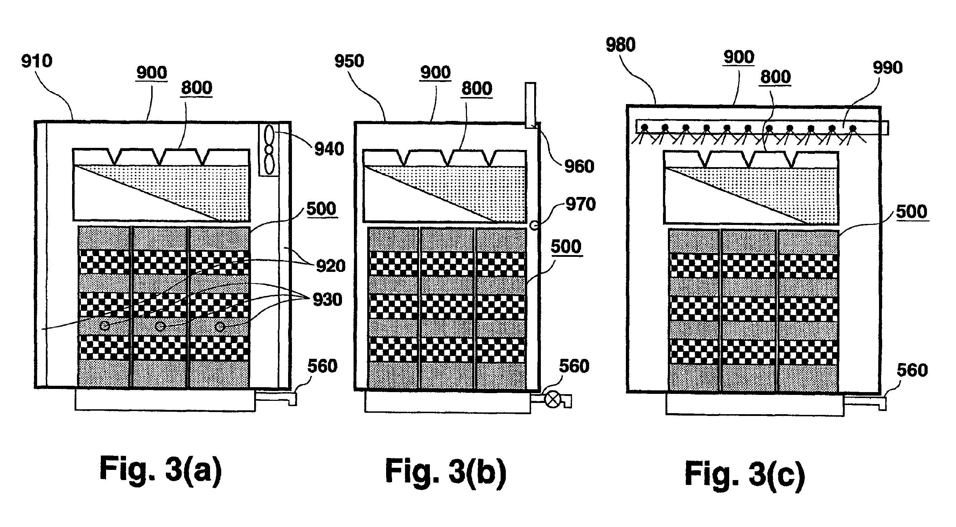

Referring now to Fig. 3(a), the insect removal device comprises a housing 910 for storing the waster water treating device 500, a heater 920 installed in the housing 910 for heating the waste water treating device 500, temperature sensors 930 provided for respective microorganism carriers in the waste water treating device 900, and a fan 940 for making the temperature inside the waste water treating device 500 uniform. The heater 920, which is an electrothremal heater, generates heat when a current flows therethrough, to heat gas within the housing 910 and thereby heat the waste water treating device 500. The waste water treating device 500 also contains steam as a result of evaporation of the waste water (and a treated water) contained threrein. Heat generation by the heater 920 is controlled in accordance with the temperature detected by the temperature sensor 930, so that the interior of the housing 910 is heated within a determined temperature range. It is also possible to heat the interior of the housing 910 by introducing heated air or heated stream into the housing 910.

In another embodiment, as shown in Fig. 3(b), the insect removal device 900 comprises a housing 950 for storing the waste water treating device 500, an inlet port 960 for introducing water in the housing 950, and a water level sensor 970 for detecting the water level in the housing 950. In this configuration, by introducing water into the housing 950, it is possible to submerge the waste water treating device 500.

In still another embodiment, as shown in Fig. 3(c), the insect removal device comprises a housing 980 for storing the waste water treating device 500 and sprinklers for evenly diffusing water onto the inner wall of the housing 980.

Referring back to Fig. 1, the solid substance treating device 600 comprises a treating tank 610 for storing the solid substances introduced after solid-liquid separation, a stirrer 620 for stirring the solid substances, and a heater or the like (not shown).

The treating tank 610 contains carriers composed of wood chips or shavings or the like and activated carbon for cultivating microorganisms. The microorganisms decompose the solid substances into carbon dioxide and water so as to produce compost.

The solid substances and the carriers are mixed by the stirrer 620 while air is introduced inside the treating tank 610 which is maintained at a predetermined temperature (30°C ~ 40°C in the present embodiment) by the heater, to thereby accelerate activation of the microorganisms or the like.

The operation of the waste treatment apparatus having the above structure will next be described.

When waste is to be treated, the start switch 203 is turned ON to start the disposal 200. As a result, the electromagnetic valve 202 is operated so that garbage discharged from the sink 101 is ground in the disposal 200 and is then introduced into the storage tank 301 through the introduction pipe 201.

By configuring the introduction pipe 201 such that it is inclined by an appropriate amount, it is possible for the ground garbage to be transported into the storage tank 301 without employing a separate drive force or the like.

When waste treatment is not required (for example, when fresh water is discharged), the start switch 200 is left OFF. In this state, the electromagnetic valve 202 would not operate, so that waste water or the like flows directly into the discharge pipe 204.

The majority of the solid substances contained in the mixture introduced into the storage tank 301 precipitate and collect at the bottom of the storage tank 301. The mixture thus collected at the bottom of the storage tank 301 is transported through the pipe 303 to the solid-liquid separation device 400 by means of the solid substance transporting air lift pump 302.

At this point, the state of the transport portion 420A of the solid-liquid separating device 400 is as shown in Fig. 2. Specifically, the standby switch 442 is operated by the magnet 441 so that the transport plate 421 awaits introduction of the mixture at a standby position.

Accordingly, the mixture transported from the flow rate controlling tank 300 contacts the transport plate 421 and loses energy and speed, such that it accumulates on the first slit portion 410A.

The transport portion 420A and the second slit portion 430A swing back and forth by means a motor (not shown) to stir the agglomeration of the mixture, and thereby achieve highly efficient solid-liquid separation.

Because the optimum number of swing depends on the type of solid substance, the number of swinging movements for each introduction of the mixture can preferably be set to a rate optimized for the introduced substance. However, from the standpoint of solid-liquid separation efficiency, a range of 5 ∼ 40 times is preferable.

After a predetermined number of swinging movements, the transport portion 420A rotates until the solid substance discharge position switch 444 operates, so that the solid substances separated from the liquid component is placed into the solid substance treating device 600.

The treating tank 610 of the solid substance treating device 600 contains the carriers composed of wood chips or shavings and activated carbon for cultivating microorganisms. The solid substances having been subjected to solid-liquid separation and introduced into the treating tank are decomposed for composting, and then bagged or the like for discharge.

The lower the water content in the solid substances separated from the liquid component in the solid-liquid separation device 400, the shorter the time required for composting the solid substances. If it is desired that treatment be completed within a fixed amount of time, the capacity of the treating tank 610 can be designed sufficiently large for treating the solid substances having a high water content.

According to the present embodiment, however, the solid-liquid separation efficiency of the solid-liquid separating device 400 is improved as described above, so that the treating tank 610 can be downsized and the cost for the whole apparatus can be reduced.

On the other hand, the liquid component (organic waste water) having been subjected to solid-liquid separation in the solid-liquid separation device 400 is temporarily stored in the precipitation separation tank 700. The supernatant in the precipitation separation tank 700 is then transported to the split-flow device 800, which divides the supernatant into evenly split flows by the action of the weirs (cutouts) and supplies the flows to the waste water treating device 500.

According to the present invention, the waste water treating device 500 not only subjects the organic components contained in the introduced organic waste water to oxidation decomposing treatment by means of aerobic microorganisms living in the device, but also rids the waste water treating device 500 of insect infestation.

As described above, three methods for removing insects are possible. Specifically, in the first example (see Fig. 3(a)), insects are removed by activating the heater 920 to heat the gas in the housing 900, thereby heating the waste water treating device 500 at 40°C ∼ 60°C. To prevent low temperature waste water from flowing into the waste water treating device 500 from the split flow device 800, it is desirable that, during heating, the air lift pump connecting the precipitation separation tank 700 and the split flow device 800 not be activated . By maintaining the temperature in the waste water treating device 500 at 40°C ~ 60°C, it is possible to kill or deactivate insects and their larvae or eggs, while reducing the adverse effects on the microorganisms used for treating the waste water in the waste water treating device 500.

It is also preferable to heat the waste water treating device 500 to the above-described temperature range by the introduction of high temperature air or steam into the housing 900 sealing the waste water treating device, as described above.

In the second example (see Fig. 3(b)), the valve of the discharge pipe 560 is first closed, and water is introduced into the housing 950 through the inlet port 960. When the water level sensor 970 detects the water level at which the waste water treating device 500 is completely submerged, introduction of water is halted. It is sufficient to perform this type of insect removal extermination approximately once a week for about one hour. In order to submerge the waste water treating device 500, it is desired that the air lift pump connecting the precipitation separation tank 700 and the split flow device 800 be inactivated so as to prevent the waste water from flowing into the waste water treating device 500 from the split flow device 800. After extermination has been completed, the valve of the discharge pipe 560 is opened to discharge the water within the housing 950.

Finally, in the third example (see Fig. 3(c)), insects such as flies present on the inner wall of the housing 980 are washed away by water diffused by the sprinklers 990, and are then discharged from the discharge pipe 560. It is sufficient to perform this insect removal by means of water diffusion approximately once a day for about one minute.

As is obvious from the above description, with the present invention, it is possible to rid the device of insects such as flies which may breed in the device by killing or removing the insect life by means such as heating, drowning, washing away, or the like. In this manner, hygienic waste water can be provided.

While the preferred embodiment of the present invention has been described using specific terms, such description is for illustrative purposes only, and it is to be understood that changes and variations may be made without departing from the spirit or scope of the appended claims.

## Claims

1. A waste treatment apparatus, comprising:
a disposal for mechanically reducing waste discharged from a kitchen;
a flow rate controlling tank for temporarily storing a mixture of the waste reduced by said disposal and kitchen waste water;
a solid-liquid separating device for separating the mixture supplied from the flow rate controlling tank into a solid component and a liquid component;
a composting device for converting the solid component separated by the solid-liquid separating device into a compost;
a precipitation-separation tank for precipitating fine particles in the liquid component supplied from the solid-liquid separating device;
a split-flow device for distributing the liquid component supplied from the precipitation-separation tank;
a waste water treating device for biologically treating the liquid component supplied from the split-flow device to thereby produce treated water; and
an insect removal device for ridding said waste water treating device of insect manifestation.

2. A waste treatment apparatus according to claim 1, wherein said insect removal device introduces gas of a temperature at which the noxious insects are killed or the activation level of the noxious insects is reduced and which will not substantiallyadversely affect microorganisms used forthe biological treatment.

3. A waste treatment apparatus according to claim 2, wherein said temperature is between 40°C ∼ 60°C.

4. A waste treatment apparatus according to claim 1, wherein said insect removal device causes said waste water treating device which is sealed to be temporarily filled with a liquid, so as to exterminate manifesting insects.

5. A waste treatment apparatus according to claim 1, wherein said insect removal device includes a sprinkler located inside said waste water treating device, which is sealed, for washing an inner wall of said waste water treating device to wash away insects present on the inner wall.
